# FASCICULE DE BREVET EUROPEEN

(11) **EP 0 521 754 B1**
(45) Date de publication et mention de la délivrance du brevet: **27.09.1995**
(21) Numéro de dépôt: 92401776.7
(22) Date de dépôt: 24.06.1992
(51) Int. Cl.: F16D 65/847, F16D 65/12

(54) **Disque de frein ventilé et moule pour la fabrication de ce disque**
Ventilierte Bremsscheibe und Form zur Herstellung dieser Scheibe
Ventilated brake disc and mold for the fabrication of this disc

(30) Priorité: 02.07.1991 FR 9108239
(43) Date de publication de la demande: 07.01.1993
(73) Titulaire: AUTOMOBILES PEUGEOT, 75116 Paris (FR); AUTOMOBILES CITROEN, 92200 Neuilly-sur-Seine (FR)
(72) Inventeur: Papagni, Robert, F-78470 Saint Remy les Chevreuse (FR)
(74) Mandataire: Durand, Yves Armand Louis

(56) Documents cités:
- EP-A- 0 057 618
- AT-A- 337 551
- DE-B- 2 507 264
- US-A- 2 451 709

## Description

La présente invention a essentiellement pour objet un disque de frein ventilé.

Elle vise également un moule pour la fabrication de ce disque.

On sait que, lors du freinage d'un véhicule, l'énergie cinétique du véhicule est absorbée par les freins et se transforme en énergie calorifique, par frottement des garnitures sur le disque de frein.

Il est donc primordial que le disque de frein soit convenablement aménagé pour que la chaleur emmagasinée sous l'effet du freinage soit le mieux possible dissipée.

A cet effet, on a déjà proposé, comme décrit par exemple dans le document FR-A-2 182 494, un disque de frein ventilé comprenant d'une part des canaux de ventilation s'étendant suivant une direction radiale entre les deux faces frontales de frottement du disque et d'autre part des ouvertures permettant de relier l'extérieur du disque aux canaux de ventilation.

Toutefois, un tel disque présente l'inconvénient d'user prématurément les garnitures de friction par effet de râpe au niveau de la partie des ouvertures débouchant sur les faces frontales ou extérieures du disque. Par ailleurs, les ouvertures sont disposées orthogonalement aux canaux de ventilation et ne permettent pas d'utiliser au mieux l'écoulement de l'air assurant la dissipation de l'énergie calorifique s'accumulant dans le disque.

Par ailleurs, on connaît d'après le document DE-B-2 507 264 ou le document EP-A-0 057 618 un disque de frein ventilé du type décrit dans le préambule des revendications 1, 2 et 3.

La présente invention a pour but de proposer un disque de frein ventilé perfectionné dont l'aménagement et/ou l'orientation des ouvertures permettent au disque de frein de se refroidir rapidement et parfaitement.

A cet effet, l'invention a pour objet un disque de frein ventilé pour freins du type axial, comprenant d'une part des canaux de ventilation s'étendant suivant une direction radiale entre les deux faces frontales de frottement du disque et d'autre part des ouvertures débouchant sur lesdites faces frontales et reliées aux canaux de ventilation, les ouvertures comportant un chanfrein au niveau de leur partie débouchante sur les deux faces frontales du disque et étant aménagées de façon à faciliter l'écoulement de l'air entre lesdites faces frontales ou extérieures du disque et les canaux de ventilation, caractérisé en ce que les axes des ouvertures sont obliques suivant la direction circonférentielle du disque et sont soit symétriques par rapport au plan médian commun des canaux de ventilation, soit parallèles.

Suivant un autre mode de réalisation, les axes des ouvertures précitées sont obliques suivant la direction radiale du disque et sont orientées soit vers l'intérieur du disque en direction de son axe de rotation soit vers l'extérieur du disque en s'éloignant de son axe de rotation.

Suivant encore un autre mode de réalisation, le disque de cette invention est caractérisé par un agencement circonférentiel alterné de deux ouvertures alignées radialement sur une face du disque et d'une ouverture sur l'autre face du disque, les axes desdites ouvertures étant situés dans un plan axial commun et étant perpendiculaires au plan médian commun des canaux de ventilation qui comportent intérieurement des rainures, encoches ou analogues, radiales débouchant dans les ouvertures et inclinées sur ledit plan médian.

Les rainures entre deux ouvertures alignées radialement sur une face du disque peuvent être convergentes en direction du plan médian commun des canaux de ventilation, tandis que les rainures de part et d'autre de l'ouverture sur l'autre face du disque sont convergentes en direction de cette ouverture.

Suivant une variante, une encoche est prévue entre deux ouvertures alignées radialement sur une face du disque, tandis que des rainures convergeant vers le plan médian des canaux de ventilation sont prévues de part et d'autre de l'ouverture sur l'autre face du disque.

Cette invention vise également un moule pour la fabrication, par un procédé de moulage à modèle perdu, d'un modèle perdu, à partir duquel sera réalisé un disque comportant des canaux de ventilation et des ouvertures à axes obliques reliant l'extérieur du disque à ces canaux, lequel moule comporte, comme connu en soi,
deux demi-coquilles et est caractérisé en ce que chaque demi-coquille comporte sur l'une de ses faces des couronnes de protubérances dont les profils sensiblement trapézoïdaux et complémentaires permettent la réalisation des ouvertures précitées à axes obliques et avec chanfrein.

Ce moule est encore caractérisé en ce que les protubérances d'une demi-coquille comportent chacune une face radialement externe formant une portion de surface tronconique et une face radialement interne qui est concave et qui est conjuguée de la face radialement externe et convexe des protubérances de l'autre demi-coquille dont la face radialement interne forme une portion de surface tronconique s'étendant parallèlement à celle citée en premier lieu.

Mais d'autres caractéristiques et avantages de l'invention apparaîtront mieux dans la description détaillée qui suit et se réfère aux dessins annexés, donnés à titre d'exemple, et dans lequels :
La figure 1 est une demi-vue en plan d'un disque de frein ventilé conforme à cette invention.
La figure 2 est une vue en coupe suivant la ligne II-II de la figure 1.
La figure 3 est une vue en coupe suivant la ligne III-III de la figure 1.
La figure 4 est une vue similaire à la figure 3, mais illustre une orientation des ouvertures, différente de celle montrée sur la figure 3.
La figure 5 est une demi-vue en plan d'un autre mode de réalisation de disque de frein ventilé selon cette invention.
La figure 6 est une vue en coupe suivant la ligne VI-VI de la figure 5.
La figure 7 est une vue similaire à la figure 6, mais illustre une variante d'orientation des ouvertures dans les faces frontales du disque.
La figure 8 est une vue en plan d'encore un autre mode de réalisation de disque de frein ventilé selon cette invention, la partie inférieure de cette figure illustrant un agencement d'ouvertures différent de l'agencement représenté sur la partie supérieure de la figure.
Les figures 9 et 10 sont des vues en coupe respectivement suivant les lignes IX-IX et X-X de la figure 8.
La figure 11 est une vue agrandie de la partie encadrée XI de la figure 10.
La figure 12 est une vue en coupe transversale d'une rainure, suivant la ligne XII-XII de la figure 11.
Les figures 13 et 14 sont des vues similaires aux figures 9 et 10 respectivement, mais illustrent des variantes de réalisation des rainures pratiquées dans les canaux de ventilation du disque.
La figure 15 est une vue en coupe suivant la ligne XV-XV de la figure 8.
La figure 16 est une vue en coupe partielle d'un moule pour fabriquer un disque avec ouvertures à axes obliques, laquelle coupe passe par deux protubérances conjuguées que comportent les faces internes des demi-coquilles du moule.
La figure 17 est une vue en coupe suivant la ligne XVII-XVII de la figure 16.
La figure 18 est une vue en coupe partielle d'un autre mode de réalisation de moule destiné à fabriquer des disques dont les ouvertures possèdent des axes perpendiculaires aux canaux de ventilation et comportent, selon l'invention, un chanfrein au niveau de leur partie débouchant vers l'extérieur du disque.

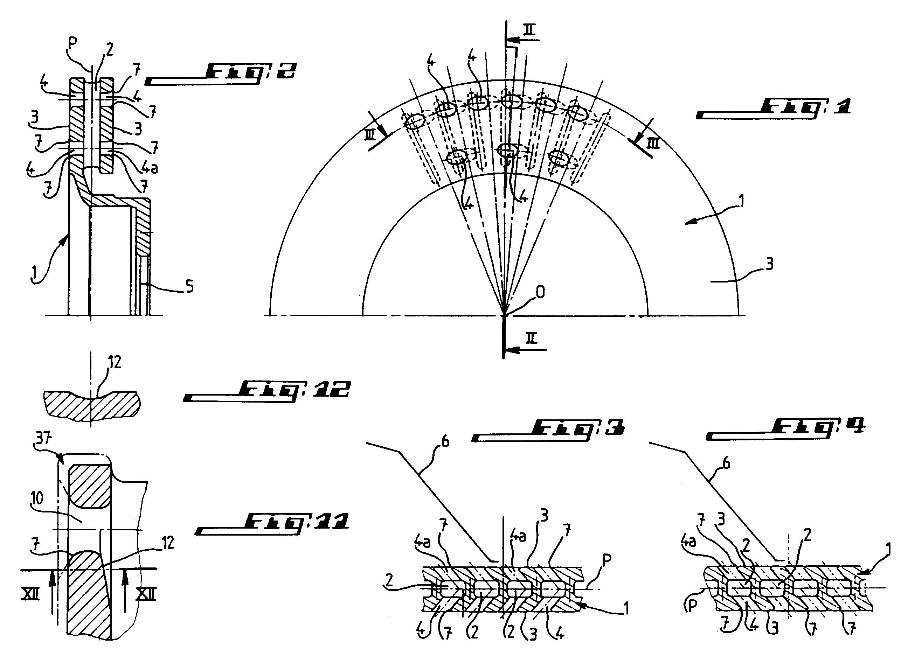

En se reportant tout d'abord aux figures 1 à 4, on voit qu'un disque 1 de frein ventilé selon cette invention comporte des canaux de ventilation 2 s'étendant suivant une direction radiale entre les deux faces frontales 3 du disque 1 qui comportent chacune des ouvertures 4, 4a, débouchant sur lesdites faces frontales et reliant l'extérieur du disque aux canaux de ventilation 2.

Comme connu en soi, les faces 3 du disque 1 peuvent coopérer avec des garnitures de friction (non représentées), et sont solidaires d'un moyeu 5 par lequel est fixé le disque sur une roue de véhicule.

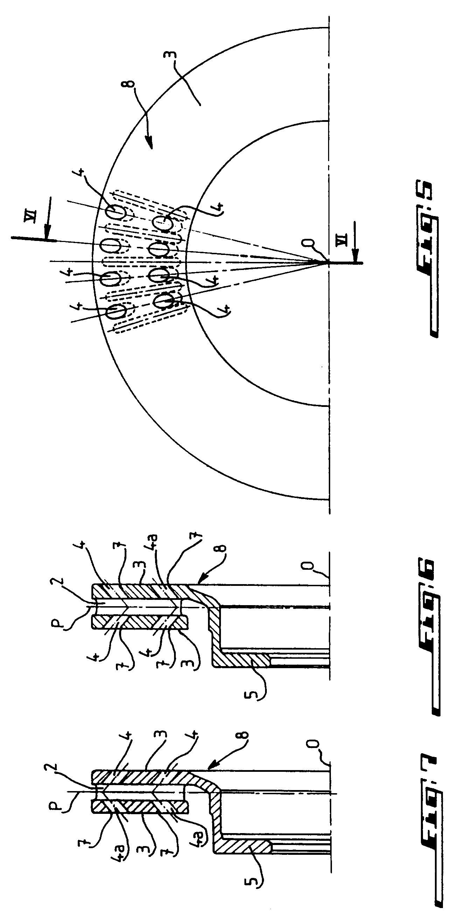

Comme on le voit sur les figures 1 et 2, les ouvertures 4 et 4a, sont, pour certaines d'entre elles, alignées deux à deux radialement et débouchent dans les canaux de ventilation 2 en regard les unes des autres.

Plus précisemment, en considérant la figure 1, on comprend que chaque face frontale 3 du disque 1 comporte deux rangées circulaires d'ouvertures 4, la rangée la plus proche de l'axe de rotation 0 du disque 1 comportant un nombre d'ouvertures 4 qui est égal à la moitié du nombre des ouvertures de la rangée d'ouvertures 4 la plus éloignée de l'axe 0, de sorte qu'une ouverture sur deux de cette dernière rangée est radialement alignée avec une ouverture de la rangée d'ouvertures la plus proche de l'axe 0.

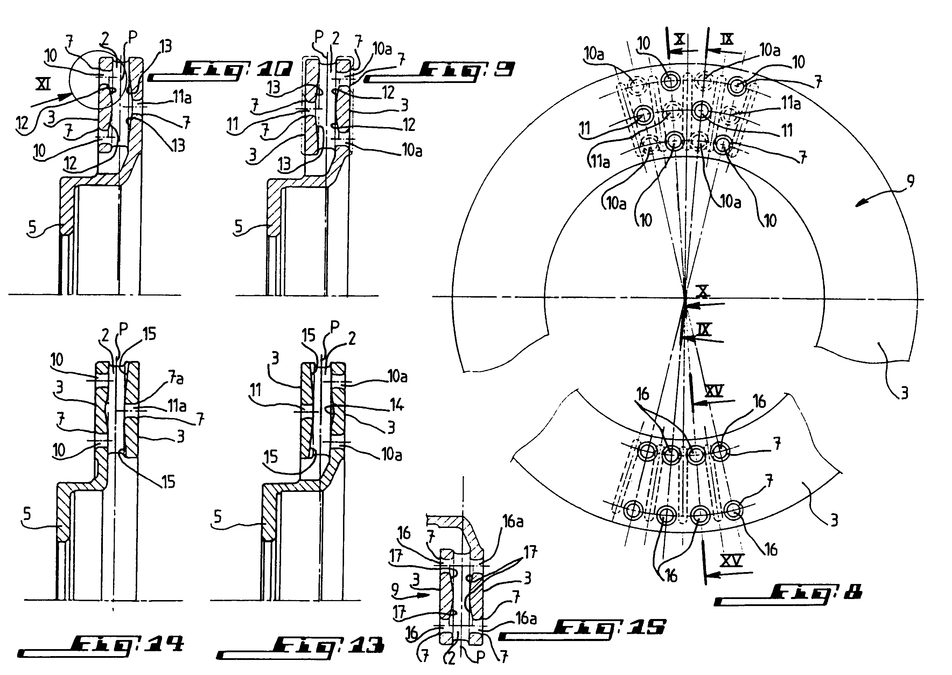

Comme on le voit clairement sur les figures 1 et 3, les axes des ouvertures 4, 4a sont obliques suivant la direction circonférentielle du disque, et ces ouvertures sont symétriques par rapport au plan médian commun P des canaux de ventilation 2.

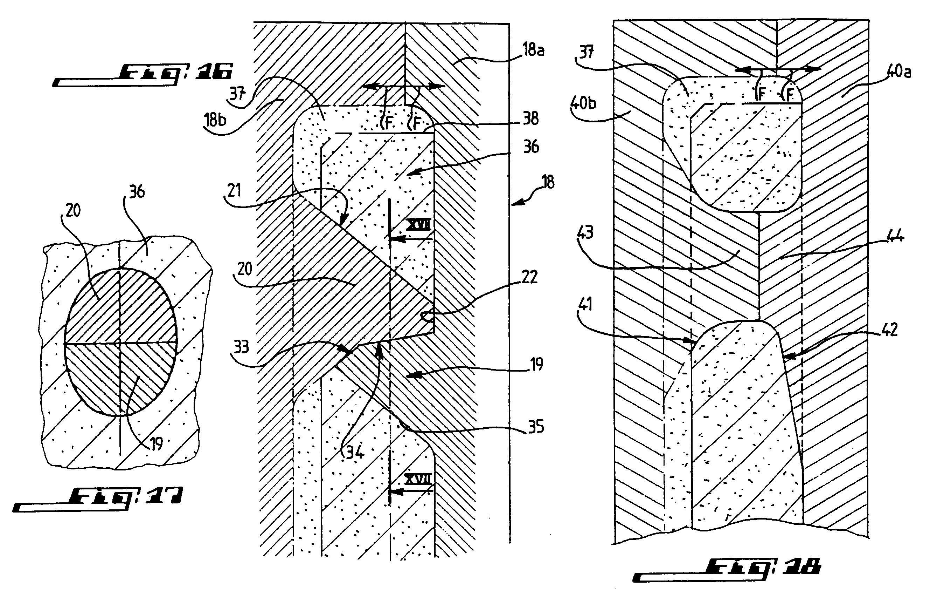

Dans le mode de réalisation illustré par la figure 4, on voit que les axes des ouvertures 4, 4a débouchant dans les canaux de ventilation 2 sont parallèles.

On a montré schématiquement en 6 sur les figures 3 et 4 une écope de refroidissement dont l'orientation est sensiblement parallèle aux axes obliques des ouvertures 4a (figure 3) et des ouvertures 4a et 4 (figure 4), ce qui permet avantageusement d'activer et d'optimiser la circulation de l'air dans le disque 1.

La partie débouchante des ouvertures 4, 4a sur les deux faces frontales 3 du disque 1 comporte un chanfrein 7 que l'on voit sur les figures 3 et 4, mais qui est mieux visible sur la figure 2. On observera ici que le chanfrein 7 n'est pas réalisé que partiellement en raison, comme on le comprend, de l'orientation oblique des ouvertures 4, 4a. Un tel chanfrein 7 évitera avantageusement l'usure prématuré par effet de râpe des garnitures de frein (non représentés) exerçant un frottement sur les faces frontales 3 du disque lors du freinage du véhicule. De plus, l'orientation oblique, telle que définie ci-avant, favorisera l'écoulement d'air au travers desdites ouvertures et des canaux de ventilation 2, et par conséquent la dissipation de la chaleur emmagasinée dans le disque lors du freinage.

Dans le mode de réalisation visible sur la figure 5, toutes les ouvertures 4, 4a dans chaque face frontale 3 du disque 8, sont alignées deux à deux radialement et débouchent dans les canaux de ventilation 2 en regard les unes des autres.

Mais ici, comme on le voit bien sur les figures 5 et 6, les axes des ouvertures 4, 4a sont obliques non plus suivant la direction circonférentielle du disque 8, mais suivant la direction radiale de ce disque. Plus précisément, comme on le voit sur la figure 6, les ouvertures 4, 4a sont orientées vers l'intérieur du disque en direction de son axe de rotation 0.

Par contre, dans la variante représentée sur la figure 7, les ouvertures 4, 4a, qui sont toujours obliques suivant la direction radiale du disque 8, sont orientées vers l'extérieur du disque en s'éloignant de l'axe de rotation 0.

Comme dans le mode de réalisation de la figure 1, la partie débouchante vers l'extérieur des ouvertures 4 et 4a comporte un chanfrein 7 limitant l'usure des garnitures de friction par effet de râpe.

Dans le mode de réalisation de la figure 8, le disque 9 comporte un agencement circonférentiel alterné de deux ouvertures 10 ou 10a alignées radialement sur une face 3 du disque et d'une ouverture 11 ou 11a sur l'autre face 3 du disque, les axes des ouvertures 10 et 11a ou 10a et 11 étant situés dans un plan axial commun.

Ici, toutes les ouvertures 10, 10a, 11, 11a visibles sur la partie supérieure de la figure 8 sont perpendiculaires au plan médian commun P des canaux de ventilation 2, et elles comportent, comme décrit précédemment, un chanfrein 7 au niveau de leur partie débouchant vers l'extérieur des faces frontales 3 du disque 9, ce chanfrein 7 étant bien visible sur les figures 9, 10, 11, 13 et 14. En outre, les canaux de ventilation 2 dans lesquels débouchent orthogonalement les ouvertures 10, 10a, 11 et 11a comportent intérieurement des rainures, encoches ou analogues radiales qui débouchent dans lesdites ouvertures et qui sont inclinées sur le plan médian P des canaux de ventilation 2.

Suivant le mode de réalisation représenté sur les figures 9 et 10, deux rainures 12 sont prévues entre deux ouvertures 10 ou 10a alignées radialement sur une face 3 du disque 9, ces deux rainures étant convergentes en direction du plan médian commun P des canaux de ventilation 2, tandis que deux rainures 13 sont ménagées dans les canaux de ventilation 2 de part et d'autre de l'ouverture 11, 11a sur l'autre face 3 du disque 9, ces deux dernières rainures étant convergentes en direction de ladite ouverture 11 ou 11a, comme on le voit bien sur les figures 9 et 10.

Dans le mode de réalisation illustré par les figures 13 et 14, une encoche 14 est ménagée dans les canaux de ventilation 2 entre deux ouvertures 10 ou 10a alignées radialement sur une face 3 du disque 9, tandis que deux rainures 15 ménagées elles aussi dans les canaux 2 sont prévues de part et d'autre de l'ouverture 11 ou 11a sur l'autre face 3 du disque, ces deux rainures 15 convergeant vers le plan médian P des canaux de ventilation 2.

On voit clairement sur la figure 12 la forme en section transversale des rainures pratiquées dans les canaux de ventilation 2.

Dans la réalisation visible sur la partie inférieure de la figure 8 et qui s'apparente à celle représentée sur la figure 5, on voit que les ouvertures 16 et 16a ménagées au travers des deux faces frontales 3 du disque 9 et orientées perpendiculairement au plan médian commun des canaux de ventilation 2, sont toutes alignées deux à deux radialement.

Et, comme on le voit bien sur la figure 15, ces ouvertures comportent toutes un chanfrein 7 au niveau de leur partie débouchant vers l'extérieur du disque 9. Deux rainures 17 convergeant en direction du plan médian commun P des canaux de ventilation 2 sont pratiquées entre deux ouvertures 16 et 16a alignées radialement sur chaque face 3 du disque 9.

On observera que toutes les rainures et/ou encoches qui viennent d'être décrites favorisent considérablement l'écoulement de l'air au travers des ouvertures reliées aux canaux de ventilation.

On se reportera maintenant aux figures 16 et 17 pour décrire un moule 18 constitué de deux demi-coquilles 18a et 18b et permettant la fabrication du modèle perdu en polystyrène, à partir duquel sera réalisé le disque de frein ventilé comportant dans chaque face des ouvertures à axes obliques, et tel que celui ou ceux faisant l'objet des figures 1 à 7.

Chaque demi-coquille 18a, 18b comporte sur sa face interne des couronnes de protubérances repérées 19 pour la demi-coquille repérées 18a et 20 pour la demi-coquille 18b.

Les profils des protubérances 19 et 20 sont, comme on le voit bien sur la figure 16 sensiblement trapézoïdaux et complémentaires, de façon à réaliser dans les faces frontales du disque après moulage des ouvertures à axes obliques et avec chanfrein.

Plus précisemment, les protubérances 20 de la demi-coquille 18b comportent chacune une face radialement externe 21 constituant une portion de surface tronconique. On a montré en 22 la portion de surface la plus interne de la protubérance 20, qui est tronquée. La protubérance 20 comporte aussi une face 33 radialement interne et faisant suite à la portion de surface 22. Cette face radialement interne 33 est concave et conjuguée d'une face radialement externe et concave 34 des protubérances 19 de la demi-coquille 18a. La face radialement interne 35 des protubérances 19 de la demi-coquille 18a forme une portion de surface tronconique qui s'étend parallèlement à celle 21 des protubérances 20, lorsque les deux demi-coquilles 18a et 18b sont assemblées comme on le voit bien sur la figure 16.

On observera ici que le profil 33 de forme conique permettra, à la séparation des deux demi-coquilles 18a, 18b d'obtenir le chanfrein 7 au niveau de la partie débouchante des ouvertures 4, 4a dans les faces frontales 3 du disque.

On précisera ici que le disque selon cette invention est réalisé par un procédé de moulage à modèle perdu, par exemple en polystyrène. Ainsi, le modèle en polystyrène montré en 36 sur la figure 16 présentera la forme exacte du disque à obtenir et sera noyé dans du sable contenu dans un bac (non représenté). Puis le métal liquide versé dans ce bac prendra la place du modèle qui se volatilise. On procèdera ensuite à un usinage de finition du disque qui consistera essentiellement à éliminer la partie 37 du disque correspondant à la partie du modèle perdu visible sur les figures 16 et 11 et délimitée par la paroi interne de la demi-coquille 18b et par le trait repéré en 38 sur la figure 16. Bien entendu, après cet usinage, le chanfrein 7 demeurera, comme on le voit bien sur la figure 11.

Sur la figure 18, on voit schématiquement et en coupe partielle un moule comportant deux demi-coquilles 40a et 40b, fonctionnant comme précédemment avec un modèle perdu, en polystyrène par exemple, et permettant de fabriquer par moulage des disques du type représenté aux figures 8 à 15, c'est-à-dire comportant, dans ses faces frontales, des ouvertures perpendiculaires au plan médian des canaux de ventilation 2, et reliées à ces canaux.

Ce mode de réalisation de moule est plus simple que le précédent par le fait que les ouvertures dans le disque à obtenir par moulage sont, comme dit précédemment, perpendiculaires aux faces frontales ou de frottement par les garnitures (non représentées), de ce disque. On dira simplement de la figure 8 qu'elle montre en 41 le profil de la demi-coquille 40b qui permet d'obtenir le chanfrein 7, et en 42 le profil de la demi-coquille 40a qui permet d'obtenir une rainure, comme décrit précédemment.

Après moulage du disque, comme expliqué précédemment à l'aide des figures 16 et 11, on procèdera à un usinage de la partie 37 du disque, laissant le chanfrein 7 à l'entrée des ouvertures formées par les deux saillies coopérantes 43, 44 des deux demi-coquilles 40b et 40a respectivement.

## Revendications

1. Disque de frein ventilé pour freins du type axial, comprenant d'une part des canaux de ventilation (2) s'étendant suivant une direction radiale entre les deux faces frontales (3) de frottement du disque (1) et d'autre part des ouvertures (4, 4a) débouchant sur lesdites faces frontales et reliées aux canaux de ventilation (2), les ouvertures (4, 4a) comportant un chanfrein (7) au niveau de leur partie débouchante sur les deux faces frontales (3) du disque (1) et étant aménagées de façon à faciliter l'écoulement de l'air entre lesdites faces frontales ou extérieures (3) du disque (1) et les canaux de ventilation (2), caractérisé en ce que les axes des ouvertures (4, 4a) sont obliques suivant la direction circonférentielle du disque (1) et sont soit symétriques par rapport au plan médian commun (P) des canaux de ventilation (2), soit parallèles.

2. Disque de frein ventilé pour freins du type axial, comprenant d'une part des canaux de ventilation (2) s'étendant suivant une direction radiale entre les deux faces frontales (3) de frottement du disque (8) et d'autre part des ouvertures (4, 4a) débouchant sur lesdites faces frontales et reliées aux canaux de ventilation (2), les ouvertures (4, 4a) comportant un chanfrein (7) au niveau de leur partie débouchante sur les deux faces frontales (3) du disque (8) et étant aménagées de façon à faciliter l'écoulement de l'air entre lesdites faces frontales ou extérieures (3) du disque (8) et les canaux de ventilation (2), caractérisé en ce que les axes des ouvertures (4, 4a) sont obliques suivant la direction radiale du disque (8) et sont orientées soit vers l'intérieur du disque (8) en direction de son axe de rotation (O) soit vers l'extérieur du disque (8) en s'éloignant de son axe de rotation.

3. Disque de frein ventilé pour freins du type axial, comprenant d'une part des canaux de ventilation (2) s'étendant suivant une direction radiale entre les deux faces frontales (3) de frottement du disque (9) et d'autre part des ouvertures (10, 10a) débouchant sur lesdites faces frontales et reliées aux canaux de ventilation (2), les ouvertures (10, 10a) comportant un chanfrein (7) au niveau de leur partie débouchante sur les deux faces frontales (3) du disque (9) et étant aménagées de façon à faciliter l'écoulement de l'air entre lesdites faces frontales ou extérieures (3) du disque (9) et les canaux de ventilation (2), caractérisé en ce que le disque (9) comporte un agencement circonférentiel alterné de deux ouvertures (10, 10a) alignées radialement sur une face (3) du disque (9) et d'une ouverture (11, 11a) sur l'autre face (3) du disque, les axes desdites ouvertures (10, 11a - 11, 10a) étant situés dans un plan axial commun et étant perpendiculaires au plan médian commun (P) des canaux de ventilation (2) qui comportent intérieurement des rainures, encoches ou analogues radiales débouchant dans les ouvertures et inclinées sur ledit plan médian.

4. Disque selon la revendication 3, caractérisé en ce que les rainures (12) entre deux ouvertures (10, 10a) alignées radialement sur une face (3) du disque (9) sont convergentes en dirction du plan médian commun (P) des canaux de ventilation (2), tandis que les rainures (13) de part et d'autre de l'ouverture (11, 11a) sur l'autre face (3) du disque (9) sont convergentes en direction de cette ouverture (11, 11a).

5. Disque selon la revendication 3, caractérisé en ce qu'une encoche (14) est prévue entre deux ouvertures (10, 10a) alignées radialement sur une face du disque (9), tandis que des rainures (15) convergeant vers le plan médian (P) des canaux de ventilation (2) sont prévues de part et d'autre de l'ouverture (11, 11a) sur l'autre face du disque (9).

6. Moule pour la fabrication, par un procédé de moulage à modèle perdu, d'un modèle perdu, à partir duquel sera réalisé un disque suivant la revendication 1 ou 2, et du type comprenant deux demi-coquilles (18a, 18b), caractérisé en ce que chaque demi-coquille comporte sur l'une de ses faces des couronnes de protubérances (19, 20) dont les profils sensiblement trapézoïdaux et complémentaires permettent la réalisation des ouvertures précitées (4, 4a) avec chanfrein (7).

7. Moule selon la revendication 6, caractérisé en ce que les protubérances (20) d'une demi-coquille (18b) comportent chacune une face radialement externe (21) constituant une portion de surface tronconique, et une face radialement interne (33) qui est concave et conjuguée de la face radialement externe et convexe (34) des protubérances (19) de l'autre demi-coquille (18a) dont la face radialement interne (35) forme une portion de surface tronconique s'étendant parallèlement à celle (21) citée en premier lieu.

## Claims

1. Ventilated brake disc for axial type brakes comprising on the one hand ventilation ducts (2) extending along a radial direction between two front friction faces (3) of the disc (1) and on the other hand apertures (4, 4a) opening at the said front faces and connected to the ventilation ducts (2), the apertures (4, 4a) comprising a chamfer (7) at the level of their opening portions on both front faces (3) of the disc (1) and being arranged so as to facilitate the air flow between the said front or external faces (3) of the disc (1) and the ventilation ducts (2), characterized in that the axes of the apertures (4, 4a) are oblique along a circumferential direction of the disc (1) and are either symmetrical with respect to the common middle plane (P) of the ventilation ducts (2) or parallel.

2. Ventilated brake disc for axial type brakes comprising on the one hand ventilation ducts (2) extending along a radial direction between both front friction faces (3) of the disc (8) and on the other hand apertures (4, 4a) opening at the said front faces and connected to the ventilation ducts (2), the apertures (4, 4a) comprising a bevelled edge (7) at the level of their opening portion on both front faces (3) of the disc (8) and being arranged so as to facilitate the air flow between the said front or outside faces (3) of the disc (8) and the ventilation ducts (2), characterized in that the axes of the apertures (4, 4a) are oblique along the radial direction of the disc (8) and are directed either inwards of the disc (8) in the direction of its axis of rotation (O) or outwards of the disc (8) by extending away from its axis of rotation.

3. Ventilated brake disc for axial type brakes comprising on the one hand ventilation ducts (2) extending along a radial direction between both front friction faces (3) of the disc (9) and on the other hand apertures (10, 10a) opening at the said front faces and connected to the ventilation ducts (2), the apertures (10, 10a) comprising a chamfered edge (7) at the level of their opening portion on both front faces (3) of the disc (9) and being arranged so as to facilitate the air flow between the said front or outside faces (3) of the disc (9) and the ventilation ducts (2), characterized in that the disc (9) comprises an alternate circumferential arrangement of two apertures (10, 10a) radially aligned on one face (3) of the disc (9) and of one aperture (11, 11a) on the other face (3) of the disc, the axes of the said apertures (10, 11a-11, 10a) being located in a common axial plane and being perpendicular to the common middle plane (P) of the ventilation ducts (2) which inside comprise radial grooves, notches or the like opening into the apertures and inclined on the said middle plane.

4. Disc according to claim 3, characterized in that the grooves (12) between two apertures (10, 10a) radially aligned on one face (3) of the disc (9) are converging towards the common middle plane (P) of the ventilation ducts (2) whereas the grooves (13) on either side of the aperture (11, 11a) on the other face (3) of the disc (9) are converging towards this aperture (11, 11a).

5. Disc according to claim 3, characterized in that a notch (14) is provided between both apertures (10, 10a) radially aligned on one face of the disc (9) whereas grooves (15) converging towards the middle plane (P) of the ventilation ducts (2) are provided on either side of the opening (11, 11a) on the other face of the disc (9).

6. Mold for the manufacture by a method of lost pattern molding, of a lost pattern from which will be made a disc according to claim 1 or 2 and of the type comprising two half-dies (18a, 18b), characterized in that each half-die comprises or one of its faces rings of protrusions (19, 20) the substantially trapezoidal and complementary profiles of which allow the making of the aforesaid apertures (4, 4a) with a chamfer (7).

7. Mold according to claim 6, characterized in that the protrusions (20) of one half-die (18b) comprise each one a radially outer face (21) constituting one portion of a frusto-conical surface and a radially inner face (33) which is concave and complementary of the radially outside and convex face (34) of the protrusions (19) of the other half-die (18a) the radially inner face (35) of which forms a portion of frusto-conical surface extending in parallel relation to that (21) cited in the first place.

## Patentansprüche

1. Belüftete Bremsscheibe für Bremsen der axialen Gattung mit einerseits sich in einer radialen Richtung zwischen zwei Stirnreibungsflächen (3) der Scheibe (1) erstreckenden Belüftungskanälen (2) und andererseits an den besagten Stirnflächen ausmündenden und mit den Belüftungskanälen (2) verbundenen Öffnungen (4, 4a), wobei die Öffnungen (4, 4a) eine Abfasung (7) im Bereich ihres an den beiden Stirnflächen (3) der Scheibe (1) ausmündenden Teiles aufweisen und derart angeordnet sind, um die Luftströmung zwischen den besagten Stirn- bzw. Aussenflächen (3) der Scheibe (1) und den Belüftungskanälen (2) zu erleichtern, dadurch gekennzeichnet, dass die Achsen der Öffnungen (4, 4a) in der Umfangsrichtung der Scheibe (1) schräg sind und entweder symmetrisch in bezug auf die gemeinsame Mittelebene (P) der Belüftungskanäle (2) oder parallel sind.

2. Belüftete Bremsscheibe für Bremsen der axialen Bauart, mit einerseits sich in einer radialen Richtung zwischen den beiden Stirnreibungsflächen (3) der Scheibe (8) erstreckenden Belüftungskanälen (2) und andererseits an den besagten Stirnflächen ausmündenden und mit den Belüftungskanälen (2) verbundenen Öffnungen (4, 4a), wobei die Öffnungen (4, 4a) eine Abfasung (7) im Bereich ihres an den beiden Stirnflächen (3) der Scheibe (8) ausmündenden Teiles aufweisen und derart angeordnet sind, um die Luftströmung zwischen den besagten Stirn- bzw. Aussenflächen (3) der Scheibe (8) und den Belüftungskanälen (2) zu erleichtern, dadurch gekennzeichnet, dass die Achsen der Öffnungen (4, 4a) in der radialen Richtung der Scheibe (8) schräg sind und entweder nach innen der Scheibe (8) in Richtung auf ihre Drehachse (O) hin oder nach aussen der Scheibe (8) hin und von ihrer Drehachse weg gerichtet sind.

3. Belüftete Bremsscheibe für Bremsen der axialen Gattung, mit einerseits sich in einer radialen Richtung zwischen den beiden Stirnreibungsflächen (3) der Scheibe (9) erstreckenden Belüftungskanälen (2) und andererseits an den besagten Stirnflächen ausmündenden und mit den Belüftungskanälen (2) verbundenen Öffnungen (10,10a), wobei die Öffnungen (10,10a) eine Abfasung (7) im Bereich ihres an den beiden Stirnflächen (3) der Scheibe (9) ausmündenden Teiles aufweisen und derart angeordnet sind, um die Luftströmung zwischen den besagten Stirn- bzw. Aussenflächen (3) der Scheibe (9) und den Belüftungskanälen (2) zu erleichtern, dadurch gekennzeichnet, dass die Scheibe (9) eine abwechselnde Kreisumfangsanordnung von zwei auf einer Seite (3) der Scheibe (9) radial fluchtend ausgerichteten Öffnungen (10,10a) und einer Öffnung (11,11a) auf der anderen Seite (3) der Scheibe aufweist, wobei die Achsen der besagten Öffnungen (10, 11a - 11, 10a) in einer gemeinsamen Axialebene gelegen sind und senkrecht zu der gemeinsamen Mittelebene (P) der Belüftungskanäle (2) verlaufen, welche innen in den Öffnungen ausmündende und auf die besagte Mittelebene geneigte radiale Nuten, Kerben oder dergleichen aufweisen.

4. Scheibe nach Anspruch 3, dadurch gekennzeichnet, dass die Nuten (12) zwischen zwei auf einer Seite (3) der Scheibe (9) radial fluchtend ausgerichteten Öffnungen (10, 10a) in Richtung auf die gemeinsame Mittelebene (P) der Belüftungskanäle (2) zusammenlaufen, während die Nuten (13) beiderseits der Öffnung (11, 11a) auf der anderen Seite (3) der Scheibe (9) in Richtung auf diese Öffnung (11, 11a) zusammenlaufen.

5. Scheibe nach Anspruch 3, dadurch gekennzeichnet, dass eine Kerbe (14) zwischen zwei auf einer Seite der Scheibe (9) radial fluchtend ausgerichteten Öffnungen (10, 10a) vorgesehen ist, während die zu der Mittelebene (P) der Belüftungskanäle (2) hin konvergierenden Nuten (15) beiderseits der Öffnung (11, 11a) auf der anderen Seite der Scheibe (9) vorgesehen sind.

6. Giessform für die Herstellung durch ein Formgiessverfahren mit verlorenem Modell, eines verlorenen Modells aus welchem ausgehend eine Scheibe gemäss Anspruch 1 oder 2 gefertigt wird und der zwei halbe Kokillen (18a, 18b) aufweisenden Gattung, dadurch gekennzeichnet, dass jede halbe Kokille auf einer ihrer Seiten Kränze von Ausstülpungen (19, 20) aufweist, deren etwa trapezförmige und komplementäre Profile die Schaffung der vorgenannten Öffnungen (4, 4a) mit Abfasung (7) gestatten.

7. Giessform nach Anspruch 6, dadurch gekennzeichnet, dass die Ausstülpungen (20) einer halben Kokille (18b) jeweils eine einen kegelstumpfförmigen Flächenteil bildende radial äussere Seite (21) und eine radial innere Seite (33) aufweisen, welche innere Seite konkav ist und der radial äusseren und konvexen Seite (34) der Ausstülpungen (19) der anderen halben Kokille (18a) formschlüssig entspricht, deren radial innere Seite (35) einen sich parallel zu derjenigen (21), die an erster Stelle genannt worden ist, erstreckenden kegelstumpfförmigen Flächenteil bildet.
